(19)

Europäisches Patentamt

European Patent Office

Office européen des brevets

(11) **EP 4 455 091 A1**

(12) **EUROPEAN PATENT APPLICATION**
published in accordance with Art. 153(4) EPC

(43) Date of publication:
**30.10.2024 Bulletin 2024/44**

(21) Application number: **22911247.9**

(22) Date of filing: **20.12.2022**

(51) International Patent Classification (IPC):
*C01G 23/047* (2006.01)    *F16L 59/02* (2006.01)
*H01M 10/613* (2014.01)    *H01M 10/651* (2014.01)
*H01M 10/6555* (2014.01)   *H01M 10/658* (2014.01)
*H01M 10/659* (2014.01)

(52) Cooperative Patent Classification (CPC):
**C01G 23/047; F16L 59/02; H01M 10/613;
H01M 10/625; H01M 10/651; H01M 10/655;
H01M 10/6555; H01M 10/658; H01M 10/659;
H01M 50/24; H01M 50/289;** Y02E 60/10

(86) International application number:
**PCT/JP2022/046980**

(87) International publication number:
**WO 2023/120545 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021    JP 2021207581
09.05.2022    JP 2022077193**

(71) Applicant: **IBIDEN CO., LTD.
Ogaki-shi, Gifu 503-8604 (JP)**

(72) Inventors:
• **TAKAHASHI, Naoki
  Ibi-gun, Gifu 501-0695 (JP)**
• **JIMBO, Naoyuki
  Ibi-gun, Gifu 501-0695 (JP)**

(74) Representative: **Hoffmann Eitle
Patent- und Rechtsanwälte PartmbB
Arabellastraße 30
81925 München (DE)**

(54) **INSULATING SHEET AND BATTERY PACK**

(57)    To provide a heat insulation sheet having an excellent heat insulation property in a wide temperature range from a temperature during normal use of a battery to a high temperature of 500°C or higher. A heat insulation sheet (10) contains: a first inorganic particle (20); a second inorganic particle (21) composed of a nanoparticle; a first inorganic fiber (30); and a second inorganic fiber (31), in which a total content of the first inorganic particle (20) and the second inorganic particle (21) is 30 mass% or more and 90 mass% or less with respect to a total mass of the heat insulation sheet, and when cumulative particle diameters of 10%, 50%, and 90% from a small particle diameter side in a volume-based cumulative distribution of the first inorganic particle as measured by a laser diffraction and scattering method are defined as D10, D50, and D90, respectively, the first inorganic particle (20) has a D50 of 1 $\mu$m or more and 100 $\mu$m or less, and a ratio (D90/D10) of the D90 to the D10 of 10 or more and 1000 or less.

*FIG.1*

**Description**

TECHNICAL FIELD

The present invention relates to a heat insulation sheet and a battery pack including a heat insulation sheet.

BACKGROUND ART

In the related art, in order to suppress heat transfer from a heating element to other objects, a heat insulation sheet that is placed close to the heating element or at least partially in contact with the heating element has been used.

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.

A lithium ion secondary battery, which has higher capacity and is capable of higher output than a lead-acid battery, a nickel-metal hydride battery, or the like, is mainly used for the battery cells. When, in the battery having higher capacity and capable of higher output, a certain battery cell suddenly rises in temperature due to an internal short circuit or overcharging of the battery, and then causes thermal runaway that continues to generate heat (that is, in the case of "abnormality"), the heat from a battery cell that has experienced thermal runaway may propagate to other adjacent battery cells, thereby causing thermal runaway in other battery cells.

In the field of the battery pack as described above, in order to suppress the propagation of heat from a battery cell that has experienced thermal runaway to adjacent battery cells, and to prevent a chain reaction of the thermal runaway, various heat insulation sheets to be interposed between battery cells have been proposed.

For example, Patent Literature 1 proposes a heat insulation material having a composite layer containing a fiber sheet and silica aerogel having a nano-sized porous structure as a heat insulation material to be installed between adjacent battery cells.

Patent Literature 2 proposes a heat insulation material made by blending a ceramic-based inorganic fiber and two kinds of inorganic powders having different refractive indexes for light having a wavelength of 1 $\mu$m or more

Patent Literature 3 proposes a heat transfer suppression sheet containing at least one of a mineral-based powder and a flame retardant, and a matrix resin selected from a thermosetting resin, a thermoplastic elastomer, and a rubber.

CITATION LIST

PATENT LITERATURE

Patent Literature 1: JP2018-204708A
Patent Literature 2: JP2003-202099A
Patent Literature 3: JP2018-206605A

SUMMARY OF INVENTION

TECHNICAL PROBLEM

However, the heat insulation material mainly made of nanosilica as in Patent Literature 1 has a high heat conductivity in a high temperature range, and there is a possibility that heat is propagated from a battery cell at a high temperature during abnormality to an adjacent battery cell.

In addition, the heat conductivity in a high temperature range can be lowered in the heat insulation material containing two kinds of inorganic powders having different refractive indexes for light having a wavelength of 1 $\mu$m or more, as in Patent Literature 2. However, as the capacity of the battery cell increases, the temperature of the battery cell during abnormality rises, so that there is a need for a heat insulation material to have an even higher heat insulation property.

Further, in the heat transfer suppression sheet in Patent Literature 3, the matrix resin is used to retain the mineral-based powder and the flame retardant. However, such a matrix resin melts at a high temperature, and there is a risk that the heat transfer suppression sheet cannot retain the shape during thermal runaway of the battery cell. In addition, in such a heat transfer suppression sheet, it is also required to well retain the powder that has a heat transfer suppression effect (that is, to suppress powder falling).

Therefore, an object of the present invention is to provide a heat insulation sheet having an excellent heat insulation property in a wide temperature range from a temperature during normal use of a battery to a high temperature of 500°C or higher, preferably having a shape retention property in a high temperature, and having suppressed falling of a powder having a heat transfer suppression effect, and a battery pack including the heat insulation sheet.

SOLUTION TO PROBLEM

The above object is achieved by the following (1) relating to a heat insulation sheet according to the present invention.

(1) A heat insulation sheet including:

a first inorganic particle;
a second inorganic particle composed of a nanoparticle; and
an inorganic fiber, in which
a total content of the first inorganic particle and the second inorganic particle is 30 mass% or more and 90 mass% or less with respect to a total mass of the heat insulation sheet, and
when particle diameters at cumulative 10%, 50%, and 90% from a small particle diameter side in a volume-based cumulative distribution of the first inorganic particle as measured by a laser diffraction and scattering method are defined as D10, D50, and D90, respectively, the D50 is 1 $\mu$m or more and 100 $\mu$m or less, and a ratio (D90/D10) of the D90 to the D10 is 10 or more and 1000 or less.

The heat insulation sheet according to the present invention preferably has the following (2) to (17).

(2) The heat insulation sheet according to (1), in which each of the first inorganic particle and the second inorganic particle is a particle composed of at least one kind of inorganic material selected from an oxide particle, a carbide particle, a nitride particle, and an inorganic hydrate particle.

(3) The heat insulation sheet according to (1) or (2), in which the inorganic fiber contains a first inorganic fiber and a second inorganic fiber different from each other in at least one property selected from an average fiber diameter, a shape, and a glass transition point.

(4) The heat insulation sheet according to (3), in which

the average fiber diameter of the first inorganic fiber is larger than the average fiber diameter of the second inorganic fiber, and
the first inorganic fiber is linear or acicular, and the second inorganic fiber is dendritic or curly.

(5) The heat insulation sheet according to (3), in which

the first inorganic fiber is an amorphous fiber, and
the second inorganic fiber is at least one kind of inorganic fiber selected from an amorphous fiber having a glass transition point higher than the glass transition point of the first inorganic fiber, and a crystalline fiber.

(6) The heat insulation sheet according to (5), in which the average fiber diameter of the first inorganic fiber is larger than the average fiber diameter of the second inorganic fiber.

(7) The heat insulation sheet according to any one of (1) to (6), in which a content of the first inorganic particle of 3 $\mu$m or more and 10 $\mu$m or less is 10 mass% or more and 80 mass% or less with respect to a total mass of the first inorganic particle.

(8) The heat insulation sheet according to any one of (1) to (7), in which

the D10 is 0.2 $\mu$m or more and 1.5 $\mu$m or less, and
the D90 is 15 $\mu$m or more and 200 $\mu$m or less.

(9) The heat insulation sheet according to any one of (1) to (8), in which an average distance between the first inorganic particles having a particle diameter of 5 $\mu$m or more and 100 $\mu$m or less is 0.1 $\mu$m or more and 1000 $\mu$m or less.

(10) The heat insulation sheet according to any one of (1) to (9), in which an average distance between the first inorganic particles having a particle diameter of less than 5 $\mu$m is 0.01 $\mu$m or more and 100 $\mu$m or less.

(11) The heat insulation sheet according to any one of (1) to (10), in which the first inorganic particle is at least one kind selected from titania, zirconia, zircon, barium titanate, zinc oxide, and alumina.

(12) The heat insulation sheet according to any one of (1) to (11), in which the second inorganic particle is a silica nanoparticle.

(13) The heat insulation sheet according to any one of (1) to (12), in which a content of the second inorganic particle is 40 mass% or more and 95 mass% or less with respect to the total mass of the first inorganic particle and the second inorganic particle.

(14) The heat insulation sheet according to any one of (1) to (13), in which

a heat conductivity at 800°C is 0.020 W/mK or more and 1.000 W/mK or less, and
a heat conductivity at 500°C is 0.010 W/mK or more and 0.600 W/mK or less.

(15) The heat insulation sheet according to any one of (3) to (14), in which

the first inorganic particle and the second inorganic particle are uniformly dispersed,
the first inorganic fiber is uniformly dispersed and oriented in one direction parallel to a main surface of the sheet, and
the second inorganic fiber is intertwined with the first inorganic fiber to form a three-dimensional web structure.

(16) The heat insulation sheet according to (15), in which the second inorganic fiber has a heat conductivity of 41 [W/m-K] or less.

(17) The heat insulation sheet according to (15) or (16), in which a total content of the first inorganic fiber and the second inorganic fiber is 5 mass% or more and 30 mass% or less with respect to the total mass of the heat insulation sheet.

The above object is achieved by the following (18) relating to a battery pack according to the present invention.

(18) A battery pack including:

a plurality of battery cells; and
the heat insulation sheet according to any one of (1) to (17), in which
the plurality of battery cells is connected in series or in parallel.

ADVANTAGEOUS EFFECTS OF INVENTION

According to the present invention, since the D50 and the D90/D10 of the first inorganic particle are defined, and the second inorganic particle composed of a nanoparticle is contained, it is possible to provide a heat insulation sheet that can reflect radiant heat in a wide temperature range from about 25°C to about 800°C, that can suppress conductive heat transfer and convective heat transfer, and that has an excellent heat insulation property.

In addition, in the present invention, when the first inorganic fiber and the second inorganic fiber are different from each other in at least one of an average fiber diameter, a glass transition point, and a shape, it is possible to provide a heat insulation sheet that has improved mechanical strength, an excellent shape retention property at a high temperature, and a good retention property for the first inorganic particle and the second inorganic particle.

Further, since the battery pack according to the present invention includes a plurality of battery cells and the above heat insulation sheet, when the heat insulation sheet is interposed between the battery cells, damages caused by thermal runaway of the battery cells can be suppressed to the minimum.

BRIEF DESCRIPTION OF DRAWINGS

[Fig. 1] Fig. 1 is a cross-sectional view schematically showing a heat insulation sheet according to a first embodiment of the present invention.
[Fig. 2] Fig. 2 is a cross-sectional view schematically showing a battery pack including the heat insulation sheet according to the first embodiment of the present invention.
[Fig. 3] Fig. 3 is a schematic diagram showing a configuration of a heat insulation sheet according to a second embodiment of the present invention.

DESCRIPTION OF EMBODIMENTS

The inventors of the present invention have made intensive studies in order to provide a heat insulation sheet having an excellent heat insulation property in a wide temperature range from a temperature during normal use of a battery to a high temperature of 500°C or higher. First, the inventors of the present invention focus on a fact that wavelengths that can be reflected differ depending on the particle diameter of inorganic particle, and have found that it is important to appropriately adjust a particle diameter distribution of the inorganic particle in order to efficiently reflect radiant heat.

Hereinafter, a heat insulation sheet and a battery pack according to an embodiment of the present invention will be described in detail with reference to the drawings.

[Heat Insulation Sheet]

(First Embodiment)

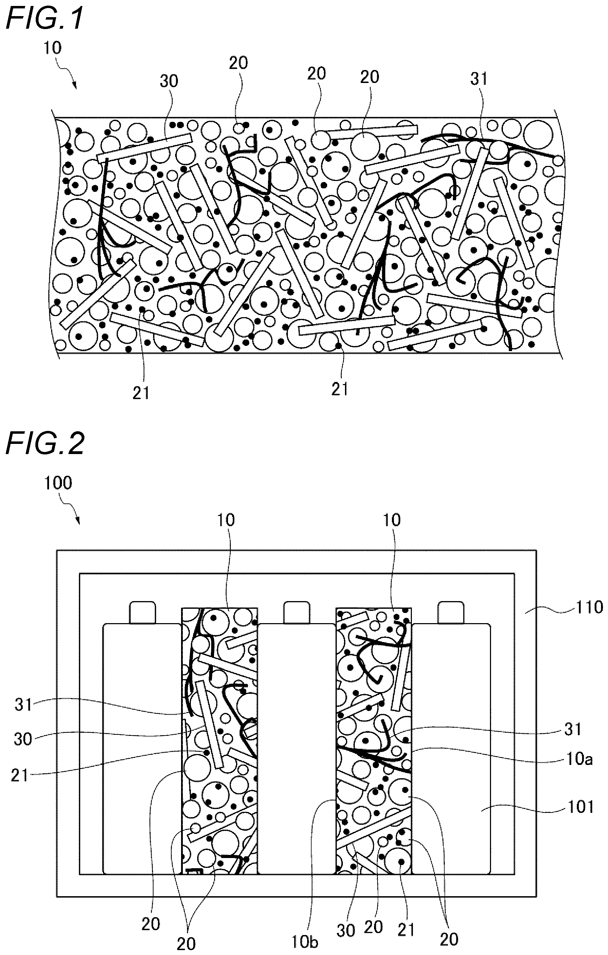

Fig. 1 is a cross-sectional view schematically showing a heat insulation sheet according to a first embodiment of the present invention. Fig. 2 is a cross-sectional view schematically showing a battery pack including the heat insulation sheet according to the first embodiment of the present invention.

As shown in Fig. 1, a heat insulation sheet 10 contains a first inorganic particle 20, a second inorganic particle 21 composed of a nanoparticle, and an inorganic fiber. As will be described in detail later, in the present embodiment, a particle diameter distribution of the first inorganic particle 20 is defined. Specifically, D50 is 1 $\mu$m or more and 100 $\mu$m or less, and a ratio (D90/D 10) of D90 to D 10 is 10 or more and 1000 or less. This means that the first inorganic particle 20 has a wide particle diameter distribution within a specific particle diameter range. In the present embodiment, the heat insulation sheet 10 contains, as an inorganic fiber, a first inorganic fiber 30 and a second inorganic fiber 31. These two kinds of inorganic fibers are different from each other in at least one property selected from an average fiber diameter, a shape, and a glass transition point.

Note that, actually, for example, the second inorganic particle 21 composed of a nanoparticle is often connected in a ring or chain shape, and the content, size, or the like of each inorganic particle and inorganic fiber are different from the actual one. In the present description, the configurations shown in Fig. 1 and Fig. 2 are used for convenience.

As a specific usage form of this heat insulation sheet 10, as shown in Fig. 2, the heat insulation sheet 10 can be used to be interposed between a plurality of battery cells 101. A battery pack 100 is constructed by storing the plurality of battery cells 101 in a battery case 110 in a state where the battery cells 101 are connected in series or in parallel (the connected state is not shown). Note that, the battery cell 101 is, for example, preferably a lithium ion secondary battery, but is not particularly limited thereto, and may be applied to other secondary batteries.

In the following description, it is assumed that a battery cell 101 generating heat is present on one surface 10a side of the heat insulation sheet 10.

When the battery cell 101 generates heat and a part of the heat reaches the first inorganic particle 20, an infrared reflection effect of the first inorganic particle 20 suppresses radiant heat transfer. In addition, when a part of the heat reaches the second inorganic particle 21 composed of a nanoparticle, conductive heat transfer is suppressed since the nanoparticle has a low density. Further, due to the presence of the first inorganic particle 20 and the second inorganic particle 21 in the heat insulation sheet 10, voids are finely dispersed, so that convective heat transfer can be suppressed. Accordingly, it is possible to suppress the heat from being propagated to the other surface 10b of the heat insulation sheet 10.

In the present embodiment, particularly, since the first inorganic particle 20 having a specific wide particle diameter distribution is contained in the heat insulation sheet 10, heat in a wide temperature range can be diffusely reflected and heat propagation can be suppressed.

In addition, in the present embodiment, when two kinds of inorganic fibers contained in the heat insulation sheet 10 are entangled with each other, the first inorganic particle 20 can be retained well. Further, when both of the two kinds of inorganic fibers do not melt at a temperature during thermal runaway of the battery cells, the heat insulation sheet 10 can maintain the shape thereof even during the thermal runaway of the battery cells and can continue to be present between the battery cells. When the surface of one inorganic fiber of the two kinds of inorganic fibers softens at a high temperature, the softened inorganic fiber binds the other inorganic fiber, the first inorganic particle 20, and the second inorganic fiber 31, the mechanical strength of the heat insulation sheet 10 at a high temperature is improved, and thus, a heat insulation sheet 10 having an excellent shape retention property at a high temperature can be obtained.

When the heat insulation sheet 10 according to the present embodiment is, for example, interposed between battery cells in a battery pack, it is possible to suppress thermal runaway of other adjacent battery cells in a wide temperature range from a normal use temperature to a high temperature. In addition, the shape retention property at a high temperature is excellent, and falling of the first inorganic particle 20 can be suppressed.

Hereinafter, materials constituting the heat insulation sheet will be described in detail.

(First Inorganic Particle 20)

<Particle Diameter Distribution of First Inorganic Particle>

In the present embodiment, the first inorganic particle 20 has a particle diameter distribution in which the D50 is 1 $\mu$m or more and 100 $\mu$m or less and the ratio (D90/D 10) of the D90 to the D 10 is 10 or more and 1000 or less. Note that, the above D10, D50 and D90 represent particle diameters at cumulative 10%, 50% and 90% from the small particle diameter side, respectively, in a volume-based cumulative distribution of the first inorganic particle 20, as measured by a laser diffraction and scattering method.

The D50 is 1 $\mu$m or more and 100 $\mu$m or less, preferably 3 $\mu$m or more and 30 $\mu$m or less, and more preferably 5 $\mu$m or more and 20 $\mu$m or less, from the viewpoint of obtaining a heat insulation sheet having an excellent heat insulation property in a wide temperature range from a temperature during normal use of a battery to a high temperature of 500°C or higher. The D90/D 10 is 10 or more and 1000 or less, preferably 15 or more and 500 or less, and more preferably 20 or more and 300 or less.

The D10 is preferably 0.2 $\mu$m or more and 1.5 $\mu$m or less, more preferably 0.4 $\mu$m or more and 1.4 $\mu$m or less, and still more preferably 0.6 $\mu$m or more and 1.3 $\mu$m or less. The D90 is preferably 15 $\mu$m or more and 200 $\mu$m or less, more preferably 20 $\mu$m or more and 100 $\mu$m or less, and still more preferably 25 $\mu$m or more and 50 $\mu$m or less.

There is a close relationship between the particle diameter of the first inorganic particle 20 and the temperature of radiant heat reflected by the first inorganic particle 20. The first inorganic particle 20 having the above particle diameter distribution can reflect radiant heat in a wide temperature range from about 25°C to about 800°C during normal use. In addition, when, for example, a large amount of inorganic particles having a particle diameter of 10 $\mu$m or more are present in the first inorganic particle 20, it is difficult to dispose the first inorganic particle 20 over the entire heat insulation sheet.

In the present embodiment, as described above, since the first inorganic particle 20 having a wide particle diameter distribution is used, and the second inorganic particle 21 composed of a nanoparticle is further contained, the first inorganic particle 20 and the second inorganic particle 21 are dispersed over the entire heat insulation sheet. Therefore, the radiant heat is efficiently reflected, the conductive heat transfer and the convective heat transfer are suppressed, and the heat propagation can be suppressed.

In the first inorganic particle 20 according to the present embodiment, the first inorganic particle having a particle diameter of 3 $\mu$m or more and 10 $\mu$m or less is preferably 10% or more and 80% or less, more preferably 20% or more and 60% or less, and still more preferably 30% or more and 50% or less with respect to the total mass of the first inorganic particle, in the volume-based cumulative distribution as measured by the laser diffraction and scattering method. Particularly, since the inorganic particle having a particle diameter of 3 $\mu$m or more and 10 $\mu$m or less easily reflects the radiant heat having a desired wavelength, when the content of the first inorganic particle 20 having a particle diameter of 3 $\mu$m or more and 10 $\mu$m or less with respect to the total mass of the first inorganic particle 20 is within the above range, the radiant heat transfer can be further suppressed. Therefore, a heat insulation sheet containing such first inorganic particle 20 has a high heat insulation property in a wide temperature range from a normal use temperature to a high temperature of 500°C or higher.

<Particle Diameter of First Inorganic Particle>

When the particle diameter of the first inorganic particle 20 is 0.01 $\mu$m or more, the first inorganic particle 20 is easily available and an increase in production cost can be suppressed. When the particle diameter is 200 $\mu$m or less, a desired heat insulation effect can be obtained. Therefore, the particle diameter of the first inorganic particle 20 is preferably 0.01 $\mu$m or more and 200 $\mu$m or less, and more preferably 0.05 $\mu$m or more and 100 $\mu$m or less.

<Average Distance between First Inorganic Particles>

In the present embodiment, in the heat insulation sheet 10, the average distance between the first inorganic particles 20 having a particle diameter of 5 $\mu$m or more and 100 $\mu$m or less is preferably 0.1 $\mu$m or more and 1000 $\mu$m or less, more preferably 1 $\mu$m or more and 600 $\mu$m or less, and still more preferably 10 $\mu$m or more and 300 $\mu$m or less.

In addition, the average distance between the first inorganic particles 20 having a particle diameter of less than 5 $\mu$m is preferably 0.01 $\mu$m or more and 100 $\mu$m or less, more preferably 0.05 $\mu$m or more and 70 $\mu$m or less, and still more preferably 0.1 $\mu$m or more and 50 $\mu$m or less.

When the average distance between the first inorganic particles 20 having a particle diameter of 5 $\mu$m or more and 100 $\mu$m or less and the average distance between the first inorganic particles 20 having a particle diameter of 5 $\mu$m

or less are within the above ranges, and the second inorganic particle 21 is disposed between the first inorganic particles 20, the second inorganic particle 21 having a small diameter enters gaps between the first inorganic particles 20 having a large diameter. Accordingly, the heat insulation sheet 10 has a more dense structure and can have a further improved heat transfer suppression effect. Here, the average distance between the first inorganic particles 20 having a particle diameter of 5 μm or more and 100 μm or less is the average value obtained by observing the heat insulation sheet with an electron microscope and measuring the distance between the first inorganic particles 20 having a particle diameter of 5 μm or more and 100 μm or less at 5 points. In addition, the average distance between the first inorganic particles 20 having a particle diameter of 5 μm or less is the average value obtained by observing the heat insulation sheet with an electron microscope and measuring the distance between the first inorganic particles 20 having a particle diameter of 5 μm or less at 40 points.

Note that, in the present description, the "particle diameter" refers to the size of a single particle as a whole, and means a primary particle diameter when the particle is a single crystal, and a secondary particle diameter when the particle is an aggregate. In addition, in the present embodiment, the average primary particle diameter can be determined by observing particles with a microscope, comparing the particles with a standard scale, and taking an average of any 10 particles.

<Refractive Index of First Inorganic Particle>

The higher the refractive index of the first inorganic particle, the better heat rays are reflected. As a result, a radiant heat transfer suppression effect can be improved. However, the higher the refractive index of the material, the higher the cost may be. Therefore, the refractive index of the first inorganic particle 20 is preferably 1.5 or more and 3.0 or less, and more preferably 2.0 or more and 2.9 or less. In addition, in consideration of cost and performance, the refractive index of the first inorganic particle is still more preferably 2.3 or more and 2.8 or less.

<Form of First Inorganic Particle>

The form of the first inorganic particle 20 is not particularly limited, and may include a hollow particle and a porous particle in addition to a normal particle form. Examples of the hollow particle include an inorganic balloon to be described later.

Next, an example of the kind of particle that can be used as the first inorganic particle 20 will be described in detail below.

<Kind of First Inorganic Particle>

Note that, as the first inorganic particle 20, a single kind of first inorganic particle 20 may be used, or two or more kinds of first inorganic particles 20 may be used in combination. When two or more kinds of first inorganic particles 20 having different heat transfer suppression effects are combined, a heating element can be cooled in multiple stages and a heat absorption effect can be exhibited in a wider temperature range. When two or more kinds of inorganic particles are contained, those having an average primary particle diameter within the above range are used as the first inorganic particle 20.

The kind of the first inorganic particle 20 is not particularly limited, and from the viewpoint of the heat transfer suppression effect, the first inorganic particle 20 is preferably composed of at least one kind of inorganic material selected from an oxide particle, a carbide particle, a nitride particle, and an inorganic hydrate particle. Among them, it is more preferable to contain an oxide particle, and it is more preferable that the glass transition point is 1000°C or higher.

(Oxide Particle)

An oxide particle has a high refractive index and has a high effect of diffusely reflecting light, so that when the oxide particle is used as the first inorganic particle 20, the radiant heat transfer can be suppressed, particularly in a high temperature range with abnormal heat generation or the like. In the present embodiment, it is preferable to use an oxide particle as the first inorganic particle 20, and it is preferable to use at least one selected from a titania particle, a zirconia particle, a zircon particle, a barium titanate particle, a zinc oxide particle, and an alumina particle as the oxide particle. That is, among the above oxide particle that can be used as the first inorganic particle 20, only one kind or two or more kinds of oxide particles may be used. Particularly, a titania particle is a component having a high refractive index compared to other metal oxides, and has a high effect of diffusely reflecting light and blocking radiant heat in a high temperature range of 500°C or higher Therefore, titania is most preferably used as the first inorganic particle 20.

(Inorganic Hydrate Particle)

The inorganic hydrate particle exhibits a so-called "heat absorption effect" that the inorganic hydrate particle receives heat from the heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide ($Al(OH)_3$), magnesium hydroxide ($Mg(OH)_2$), calcium hydroxide ($Ca(OH)_2$), zinc hydroxide ($Zn(OH)_2$), iron hydroxide ($Fe(OH)_2$), manganese hydroxide ($Mn(OH)_2$), zirconium hydroxide ($Zr(OH)_2$), and gallium hydroxide ($Ga(OH)_3$).

For example, aluminum hydroxide has about 35% crystal water, and as shown in the following formula, thermally decomposes to release the crystal water and exhibits a heat absorption effect. Then, after releasing the crystal water, aluminum hydroxide forms alumina ($Al_2O_3$), which is a porous material, and functions as a heat insulation material.

$$2Al(OH)_3 \rightarrow Al_2O_3 + 3H_2O$$

Note that, as will be described later, a battery pack according to the present embodiment includes the heat insulation sheet, and in a battery cell that has experienced thermal runaway, the temperature rapidly rises to over 200°C and continues to rise to about 700°C. Therefore, it is preferable that the first inorganic particle 20 is composed of an inorganic hydrate whose thermal decomposition start temperature is 200°C or higher

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

In a case where the inorganic hydrate particle is used as the first inorganic particle 20, when the average particle diameter thereof is too large, it takes a certain amount of time for the first inorganic particle 20 (inorganic hydrate) near the center of the heat insulation sheet to reach the thermal decomposition temperature thereof, so that the first inorganic particle 20 near the center of the heat insulation sheet may not be completely thermally decomposed. Therefore, the average particle diameter of the inorganic hydrate particle is preferably 0.01 μm or more and 200 μm or less, and more preferably 0.05 μm or more and 100 μm or less.

<Content of First Inorganic Particle>

As described above, the heat insulation sheet according to the present embodiment contains the first inorganic particle 20 having a particle diameter distribution within the above range, and when the content of the first inorganic particle 20 is 1.5 mass% or more with respect to the total mass of the heat insulation sheet, an effect of suppressing radiant heat transfer can be obtained. Therefore, the content of the first inorganic particle 20 is preferably 1.5 mass% or more, and more preferably 10 mass% or more with respect to the total mass of the heat insulation sheet.

On the other hand, when the content of the first inorganic particle 20 is 45 mass% or less with respect to the total mass of the heat insulation sheet, the contents of the second inorganic particle 21, the first inorganic fiber 30, and the second inorganic fiber 31, to be described later, can be ensured. Therefore, the content of the first inorganic particle 20 is preferably 45 mass% or less, and more preferably 35 mass% or less with respect to the total mass of the heat insulation sheet.

(Second Inorganic Particle 21)

<Form of Second Inorganic Particle>

(Nanoparticle)

In the present embodiment, the nanoparticle refers to a nanometer-order particle having a spherical or nearly spherical shape and having an average primary particle diameter of less than 1 μm. The nanoparticle has a low density and thus suppresses the conductive heat transfer When the second inorganic particle 21 composed of a nanoparticle is contained in the heat insulation sheet 10, voids between the first inorganic particles 20 and/or the second inorganic particles 21 are finely dispersed, so that an excellent heat insulation property that suppresses the convective heat transfer can be obtained. Therefore, the conduction of heat between adjacent nanoparticles can be suppressed during normal use of a battery in a normal temperature range. When the second inorganic particle 21 as a nanoparticle enters the gaps between the first inorganic particles 20 having a large diameter, a more dense structure is formed, and the strength of the heat insulation sheet 10 can be further improved.

Since the heat insulation sheet 10 contains the second inorganic particle 21 composed of a nanoparticle having a small average primary particle diameter, even when the heat insulation sheet is compressed by expansion due to thermal runaway of the battery cell and the internal density increases, an increase in conductive heat transfer of the heat insulation sheet can be suppressed. This is thought to be because the nanoparticle tends to form fine voids between particles due to a repulsive force caused by static electricity, and the bulk density thereof is low, so that it is filled with the particle so as to provide a cushioning property.

Note that in the present embodiment, the kind of the second inorganic particle 21 composed of a nanoparticle is not particularly limited as long as the above definition of nanoparticle is met. Similar to the first inorganic particle 20, the second inorganic particle 21 is preferably composed of at least one kind of inorganic material selected from an oxide particle, a carbide particle, a nitride particle, and an inorganic hydrate particle, and more preferably contain an oxide particle, from the viewpoint of the heat transfer suppression effect. For example, a silica nanoparticle has a low density and thus has an effect of suppressing conductive heat transfer In addition, the silica nanoparticle has fine voids dispersed therein and thus also has an effect of suppressing convective heat transfer Further, since the silica nanoparticle is a material having a high heat insulation property and has a few contact points between particles, the amount of heat conducted by the silica nanoparticle is smaller than that in a case of using a silica particle having a large particle diameter

Further, since a generally available silica nanoparticle has a bulk density of about 0.1 g/cm$^3$, for example, even when battery cells disposed on both sides of the heat insulation sheet thermally expand and a large compressive stress is applied to the heat insulation sheet, the size (area) or the number of contact points between the silica nanoparticles does not increase remarkably, and the heat insulation property can be maintained. Therefore, it is preferable to use a silica nanoparticle as the nanoparticle. As the silica nanoparticle, wet silica, dry silica, aerogel, or the like can be used.

<Average Primary Particle Diameter of Second Inorganic Particle>

When the average primary particle diameter of the second inorganic particle 21 is limited to a specific range, an even higher heat insulation property can be obtained.

That is, when the average primary particle diameter of the nanoparticle is 1 nm or more and 100 nm or less, the convective heat transfer and the conductive heat transfer of the heat within the heat insulation sheet can be suppressed particularly in a temperature range of lower than 500°C, and the heat insulation property can be further improved. In addition, even when a compressive stress is applied, voids remaining between the nanoparticles and contact points between many particles can suppress the conductive heat transfer, and the heat insulation property of the heat insulation sheet can be maintained.

Note that the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

<Content Ratio of Second Inorganic Particle>

In the present embodiment, in order to improve the heat insulation property in a wide temperature range, the heat insulation sheet 10 contains the first inorganic particle 20 having a specific particle diameter distribution. Even when the added amount of the first inorganic particle 20 to the second inorganic particle is small, the effect of suppressing radiant heat transfer in the heat can be obtained. In addition, in order to obtain the effects of suppressing convective heat transfer and conductive heat transfer in the heat by the second inorganic particle 21, it is preferable to increase the added amount of the second inorganic particle 21 to the first inorganic particle 20.

Note that, since the second inorganic particle 21 is a nanoparticle, the bulk density is low (about 0.1 g/cm$^3$), and since the first inorganic particle 20 has an average particle diameter larger than that of the second inorganic particle 21, there are fewer voids. Therefore, the bulk density of the first inorganic particle 20 is 10 times or more that of the second inorganic particle 21. When, for example, titania is selected as the first inorganic particle, the bulk density of the first inorganic particle 20 is about 40 times that of the second inorganic particle 21 (about 4 g/cm$^3$). Therefore, when expressed in terms of volume ratio (compared to when expressed in mass ratio), the ratio of the first inorganic particle 20 is very small, but the first inorganic particle 20 has the effect of suppressing radiant heat transfer and function effectively even in a very small amount. In this way, since the mass ratio of the second inorganic particle 21 to the first inorganic particle 20 greatly influences the heat insulation property in a range from a normal temperature to a high temperature of 500°C or higher, it is preferable to appropriately adjust the mass ratio of the second inorganic particle 21 to the first inorganic particle 20 in the present embodiment.

When the content of the second inorganic particle 21 is 40 mass% or more with respect to the total mass of the second inorganic particle 21 and the first inorganic particle 20, the second inorganic particle 21 occupies most of the volume, suppresses the convective heat transfer and the conductive heat transfer of the heat within the heat insulation sheet, and improves the heat insulation property even during compression.

In addition, the content of the second inorganic particle 21 is more preferably 50 mass% or more with respect to the total mass of the second inorganic particle 21 and the first inorganic particle 20. When the content of the second inorganic particle 21 is 50 mass% or more with respect to the total mass of the second inorganic particle 21 and the first inorganic particle 20, the second inorganic particle 21 further occupies most of the volume, suppresses the convective heat transfer and the conductive heat transfer of the heat within the heat insulation sheet, and further improves the heat insulation property.

On the other hand, when the content of the second inorganic particle 21 is 95 mass% or less with respect to the total mass of the second inorganic particle 21 and the first inorganic particle 20, the content of the first inorganic particle 20 is 5 mass% or more, and the first inorganic particle 20 can exhibit a radiant heat blocking effect. Therefore, in a high temperature range of 500°C or higher, the radiant heat transfer of the heat within the heat insulation sheet can be suppressed and the heat insulation property can be exhibited.

In addition, the content of the second inorganic particle 21 is more preferably 90 mass% or less with respect to the total mass of the second inorganic particle 21 and the first inorganic particle 20. When the content of the second inorganic particle 21 is 90 mass% or less with respect to the total mass of the second inorganic particle 21 and the first inorganic particle 20, the content of the first inorganic particle 20 is 10 mass% or more, and the first inorganic particle 20 can further exhibit the radiant heat blocking effect. Therefore, in a high temperature range of 500°C or higher, the radiant heat transfer of the heat within the heat insulation sheet can be suppressed and the heat insulation property can be further exhibited even during compression.

As described above, titania has a high effect of blocking the radiant heat, a silica nanoparticle has extremely low conductive heat transfer, and an excellent heat insulation property can be maintained even when a compressive stress is applied to the heat insulation sheet. Therefore, it is most preferable that titania is used as the first inorganic particle 20 and a silica nanoparticle is used as the second inorganic particle 21.

<Total content of First Inorganic Particle and Second Inorganic Particle>

When the total content of the first inorganic particle 20 and the second inorganic particle 21 is less than 30 mass% with respect to the total mass of the heat insulation sheet, the heat insulation effect of the first inorganic particle 20 and the second inorganic particle 21 cannot be sufficiently obtained. Therefore, the total content of the first inorganic particle 20 and the second inorganic particle 21 is preferably 30 mass% or more, more preferably 40 mass% or more, and still more preferably 50 mass% or more, with respect to the total mass of the heat insulation sheet.

On the other hand, when the total content of the first inorganic particle 20 and the second inorganic particle 21 is more than 90 mass% with respect to the total mass of the heat insulation sheet, the total content of the first inorganic fiber 30 and the second inorganic fiber 31 is less than 10 mass%, and the mechanical strength at a high temperature decreases, making it impossible to obtain the desired shape retention property. Therefore, the total content of the first inorganic particle 20 and the second inorganic particle 21 is preferably 90 mass% or less, more preferably 80 mass% or less, and still more preferably 70 mass% or less, with respect to the total mass of the heat insulation sheet.

(Inorganic Fiber)

Examples of the inorganic fiber include ceramic-based fibers such as a silica fiber, an alumina fiber, a mullite fiber, an alumina silicate fiber, a zirconia fiber, a carbon fiber, a soluble fiber, a refractory ceramic fiber, an aerogel composite, a magnesium silicate fiber, an alkaline earth silicate fiber, a potassium titanate fiber, a silicon carbide fiber, and a potassium titanate whisker fiber, glass-based fibers such as a glass fiber, glass wool, and slag wool, rock wool, a basalt fiber, and natural mineral-based fibers such as wollastonite as mineral-based fibers other than those listed above.

These inorganic fibers are preferred in terms of heat resistance, strength, easy availability, and the like. Among the inorganic fibers, a silica-alumina fiber, an alumina fiber, a silica fiber, rock wool, an alkaline earth silicate fiber, and a glass fiber are particularly preferred from the viewpoint of handling properties.

The cross-sectional shape of the inorganic fiber is not particularly limited, and examples thereof include a circular cross-section, a flat cross-section, a hollow cross-section, a polygonal cross-section, and a core cross-section. Among them, an irregular cross-section fiber having a hollow cross-section, a flat cross-section, or a polygonal cross-section can be preferably used since the heat insulation property is slightly improved.

Unless the inorganic fiber has special properties to be described later, the lower limit of the average fiber length of the inorganic fiber is preferably 0.1 mm, and the lower limit is more preferably 0.5 mm. On the other hand, the upper limit of the average fiber length of the inorganic fiber is preferably 50 mm, and the upper limit is more preferably 10 mm. When the average fiber length of the inorganic fiber is less than 0.1 mm, the inorganic fibers are unlikely to be entangled with each other, and the mechanical strength of the heat insulation sheet 10 may decrease. On the other hand, when the average fiber length is more than 50 mm, a reinforcing effect can be obtained, but the inorganic fibers may not be able to entangle tightly with each other, or a single inorganic fiber may curl up, making continuous voids more likely to occur, which may result a decrease in heat insulation property.

Unless the inorganic fiber has special properties to be described later, the lower limit of the average fiber diameter of the inorganic fiber is preferably 1 $\mu$m, the lower limit is more preferably 2 $\mu$m, and the lower limit is still more preferably 3 $\mu$m. On the other hand, the upper limit of the average fiber diameter of the inorganic fiber is preferably 15 $\mu$m, and the upper limit is more preferably 10 $\mu$m. When the average fiber diameter of the inorganic fiber is less than 1 $\mu$m, the mechanical strength of the inorganic fiber may decrease. In addition, from the viewpoint of the influence on human health, the average fiber diameter of the inorganic fiber is preferably 3 $\mu$m or more. On the other hand, when the average fiber diameter of the inorganic fiber is larger than 15 $\mu$m, solid heat transfer using the inorganic fiber as a medium may increase, resulting in a decrease in heat insulation property, and the moldability and the strength of the heat insulation sheet may deteriorate.

Note that the inorganic fiber may be used one kind or in combination in two or more kinds thereof. As shown in Fig. 2, the heat insulation sheet 10 preferably contains, for example, the first inorganic fiber 30 and the second inorganic fiber 31 different from each other in at least one property selected from an average fiber diameter, a shape, and a glass transition point. When two kinds of inorganic fibers having different properties are contained, the mechanical strength and the retention property for the inorganic particle of the heat insulation sheet 10 can be improved.

<Two kinds of Inorganic Fibers Having Different Average Fiber Diameters and Fiber Shapes>

In the present embodiment, the average fiber diameter of the first inorganic fiber 30 is larger than the average fiber diameter of the second inorganic fiber 31. The first inorganic fiber 30 having a large average fiber diameter (large diameter) has an effect of improving the mechanical strength and the shape retention property of the heat insulation sheet 10. When the first inorganic fiber 30 has a diameter larger than that of the second inorganic fiber 31, the above effect can be obtained. Since external impacts may act on the heat insulation sheet, the containing of the first inorganic fiber 30 in the heat insulation sheet 10 improves the impact resistance. External impacts include, for example, a pressing force due to expansion of battery cells, or a wind pressure due to ignition of battery cells.

In addition, in order to improve the mechanical strength and the shape retention property of the heat insulation sheet 10, it is particularly preferable that the first inorganic fiber 30 is linear or acicular. Note that a linear or acicular fiber refers to a fiber having a degree of crimp, which will be described later, of, for example, less than 10%, and preferably 5% or less.

More specifically, in order to improve the mechanical strength and the shape retention property of the heat insulation sheet 10, the average fiber diameter of the first inorganic fiber 30 is preferably 1 $\mu$m or more, and more preferably 3 $\mu$m or more. When the first inorganic fiber 30 is too thick, the moldability and the processability into the heat insulation sheet 10 may decrease. Therefore, the average fiber diameter is preferably 20 $\mu$m or less, and more preferably 15 $\mu$m or less.

Note that the fiber length of the first inorganic fiber 30 is preferably 100 mm or less since when it is too long, the moldability and the processability may decrease. Further, the fiber length of the first inorganic fiber 30 is preferably 0.1 mm or more since when it is too short, the shape retention property and the mechanical strength decrease.

On the other hand, the second inorganic fiber 31 having a small average fiber diameter (small diameter) has an effect of improving the retention property for the first inorganic particle 20 and the second inorganic particle 21, and increasing the flexibility of the heat insulation sheet 10. Therefore, it is preferable that the second inorganic fiber 31 has a diameter smaller than that of the first inorganic fiber 30.

More specifically, in order to improve the retention property for the first inorganic particle 20 and the second inorganic particle 21, it is preferable that the second inorganic fiber 31 is easily deformable and has flexibility. Therefore, the average fiber diameter of the small-diameter inorganic fiber is preferably less than 1 $\mu$m, and more preferably 0.1 $\mu$m or less. However, when the small-diameter inorganic fiber is too thin, the small-diameter inorganic fiber is easily broken, and the ability to retain the first inorganic particle 20 and the second inorganic particle 21 decreases. In addition, a large proportion of fibers remain entangled in the heat insulation sheet 10 without retaining the first inorganic particle 20 and the second inorganic particle 21, and in addition to a decrease in ability to retain the first inorganic particle 20 and the second inorganic particle 21, the moldability and the shape retention property also become poor. Therefore, the average fiber diameter of the second inorganic fiber 31 is preferably 1 nm or more, and more preferably 10 nm or more.

Note that the fiber length of the second inorganic fiber 31 is preferably 0.1 mm or less since when it is too long, the moldability and the shape retention property decrease. Further, the fiber length of the second inorganic fiber 31 is preferably 1 $\mu$m or more since when it is too short, the shape retention property and the mechanical strength decrease.

In addition, the second inorganic fiber 31 is preferably dendritic or curly. Having such a shape, the second inorganic fiber 31 is entangled with the first inorganic fiber 30, the first inorganic particle 20, and the second inorganic particle 21 in the heat insulation sheet. Therefore, the ability to retain the first inorganic particle 20 and the second inorganic particle 21 is improved. In addition, when the heat insulation sheet is subjected to a pressing force or a wind pressure, the second inorganic fiber 31 is suppressed from slipping and moving, thereby improving the mechanical strength, particularly against an external pressing force or impact.

Note that dendritic refers to a two-dimensionally or three-dimensionally branched structure, for example, feather shape, tetrapod shape, radial, or three-dimensional mesh shape.

When the second inorganic fiber 31 is dendritic, the average fiber diameter can be obtained by measuring the diameters of a trunk and branches at several points using an SEM and calculating the average value thereof.

In addition, curly refers to a structure in which the fibers are bent in various directions. As one method of quantifying the curly form, it is known to calculate the degree of crimp from an electron micrograph, which can be calculated according to the following equation, for example.

$$\text{Degree of crimp (\%)} = (\text{fiber length - distance between fiber ends})/(\text{fiber length}) \times 100$$

Here, both the fiber length and the distance between fiber ends are measured values on an electron micrograph. That is, the fiber length and the distance between fiber ends are values obtained by projection onto a two-dimensional plane, and are shorter than actual values. Based on this equation, the degree of crimp of the second inorganic fiber 31 is preferably 10% or more, and more preferably 30% or more. When the degree of crimp is small, the ability to retain the first inorganic particle 20 and the second inorganic particle 21 decreases, and entanglement (network) between the second inorganic fibers 31 and between the first inorganic fiber 30 and the second inorganic fiber 31 is difficult to form.

In the embodiment described above, as a method of improving the mechanical strength, the shape retention property, and the retention property for the first inorganic particle 20 and the second inorganic particle 21 of the heat insulation sheet, the first inorganic fiber 30 and the second inorganic fiber 31 having different average fiber diameters and fiber shapes are used. However, the mechanical strength, the shape retention property, and the particle retention property of the heat insulation sheet 10 can also be improved by using the first inorganic fiber 30 and the second inorganic fiber 31 having different glass transition points. In addition, the mechanical strength, the shape retention property, and the particle retention property of the heat insulation sheet 10 can also be improved by using the first inorganic fiber 30 and the second inorganic fiber 31 having different glass transition points and average fiber diameters.

As described above, in the present embodiment, in order to improve the mechanical strength, the shape retention property, and the particle retention property of the heat insulation sheet, various combinations of inorganic fibers are used. That is, the glass transition point, the average fiber diameter, and the shape of the first inorganic fiber and the second inorganic fiber are different depending on the embodiment. However, in the present description, for convenience, the first inorganic fiber 30 and the second inorganic fiber 31 are denoted in each embodiment, and all embodiments are shown in Fig. 1 and Fig. 2.

<Two Kinds of Inorganic Fibers Having Different Glass Transition Points>

In another embodiment of the present invention, the first inorganic fiber 30 is an amorphous fiber, and the second inorganic fiber 31 is at least one kind of fiber selected from an amorphous fiber having a glass transition point higher than that of the first inorganic fiber 30, and a crystalline fiber.

(First Inorganic Fiber 30)

Note that, the melting point of the crystalline inorganic fiber is usually higher than the glass transition point of the amorphous inorganic fiber. Therefore, when the first inorganic fiber 30 is exposed to a high temperature, the surface thereof softens before the second inorganic fiber 31, and the first inorganic fiber 30 binds the first inorganic particle 20, the second inorganic particle 21, and the second inorganic fiber 31. Therefore, by containing the first inorganic fiber 30 as described above in the heat insulation sheet 10, the mechanical strength of a heat insulation layer can be improved.

Specifically, as the first inorganic fiber 30, an inorganic fiber having a melting point of lower than 700°C is preferred, and many amorphous inorganic fibers can be used. Among them, a $SiO_2$-containing fiber having an excellent heat insulation property is preferred, and a glass fiber is more preferred because of being inexpensive, easily available, and having excellent handling properties.

(Second Inorganic Fiber 31)

As described above, the second inorganic fiber 31 is at least one kind of fiber selected from an amorphous fiber having a glass transition point higher than that of the first inorganic fiber 30, and a crystalline fiber. As the second inorganic fiber 31, many crystalline inorganic fibers can be used.

When the second inorganic fiber 31 is composed of a crystalline fiber or one having a glass transition point higher than that of the first inorganic fiber 30, even when the first inorganic fiber 30 softens when exposed to a high temperature, the second inorganic fiber 31 does not melt or soften. Therefore, even during thermal runaway of battery cells, it can maintain the shape and continue to be present between the battery cells.

In addition, when the second inorganic fiber 31 does not melt or soften, minute spaces are maintained between particles, i.e., the first inorganic particles 20 or the second inorganic particles 21, between the first inorganic particle 20 or the second inorganic particle 21 and the first inorganic fiber 30 or the second inorganic fiber 31, and between fibers, i.e., the first inorganic fibers 30 or the second inorganic fibers 31. Therefore, the heat insulation effect due to air can be exhibited and an excellent heat transfer suppression performance can be retained.

When the second inorganic fiber 31 is crystalline, examples of the second inorganic fiber 31 include ceramic-based fibers such as a silica fiber, an alumina fiber, a mullite fiber, an alumina silicate fiber, a carbon fiber, a silicon carbide fiber, and a zirconia fiber, rock wool, an alkaline earth silicate fiber, a zirconia fiber, a potassium titanate fiber, and natural mineral-based fibers such as wollastonite.

When the second inorganic fiber 31 is one having a melting point of higher than 1000°C among the fibers listed, even when the battery cell experiences thermal runaway, the second inorganic fiber 31 does not melt or soften and can maintain the shape, and can thus be suitably used.

Note that, among the fibers listed as the above second inorganic fiber 31, for example, it is more preferable to use ceramic-based fibers such as a silica fiber, an alumina fiber, and an alumina silicate fiber, and a natural mineral-based fiber. Among them, it is still more preferable to use one having a melting point of higher than 1000°C.

In addition, even when the second inorganic fiber 31 is amorphous, any fiber having a glass transition point higher than that of the first inorganic fiber 30 can be used. For example, a glass fiber having a glass transition point higher than that of the first inorganic fiber 30 may be used as the second inorganic fiber 31.

Note that, as the second inorganic fiber 31, the various illustrated inorganic fibers may be used one kind, or two or more kinds thereof may be used in combination.

Note that, as described above, the first inorganic fiber 30 has a glass transition point lower than that of the second inorganic fiber 31, and when exposed to a high temperature, the first inorganic fiber 30 softens first. Therefore, the first inorganic fiber 30 can bind the first inorganic particle 20, the second inorganic particle 21, and the second inorganic fiber 31. However, for example, in the case where the second inorganic fiber 31 is amorphous and has a fiber diameter smaller than the fiber diameter of the first inorganic fiber 30, when the glass transition points of the first inorganic fiber 30 and the second inorganic fiber 31 are close to each other, the second inorganic fiber 31 may soften first.

Therefore, when the second inorganic fiber 31 is an amorphous fiber, the glass transition point of the second inorganic fiber 31 is preferably 100°C or more, and more preferably 300°C or more, higher than the glass transition point of the first inorganic fiber 30.

Note that, the fiber length of the first inorganic fiber 30 is preferably 100 mm or less, and is preferably 0.1 mm or more. The fiber length of the second inorganic fiber 31 is preferably 0.1 mm or less. The reasons are as described above.

<Two Kinds of Inorganic Fibers Having Different Glass Transition Points and Average Fiber Diameters>

In still another embodiment of the present invention, the first inorganic fiber 30 is an amorphous fiber, and the second inorganic fiber 31 is at least one kind of inorganic fiber selected from an amorphous fiber having a glass transition point higher than that of the first inorganic fiber 30, and a crystalline fiber. In addition, the average fiber diameter of the first inorganic fiber 30 is larger than the average fiber diameter of the second inorganic fiber 31.

As described above, in one embodiment of the present invention, the average fiber diameter of the first inorganic fiber 30 is larger than that of the second inorganic fiber 31. In addition, the large-diameter first inorganic fiber 30 is an amorphous fiber, and the small-diameter second inorganic fiber 31 is at least one kind of fiber selected from an amorphous fiber having a glass transition point higher than that of the first inorganic fiber 30, and a crystalline fiber. Accordingly, the first inorganic fiber 30 has a low glass transition point and softens early, and thus becomes film-like and hardens as the temperature rises. On the other hand, when the small-diameter second inorganic fiber 31 is at least one kind of fiber selected from an amorphous fiber having a glass transition point higher than that of the first inorganic fiber 30, and a crystalline fiber, even when the temperature rises, the small-diameter second inorganic fiber 31 remains in the form of fiber. Therefore, the structure of the heat insulation sheet can be retained and powder falling can be prevented.

Note that, the fiber length of the first inorganic fiber 30 is preferably 100 mm or less, and is preferably 0.1 mm or more. The fiber length of the second inorganic fiber 31 is preferably 0.1 mm or less. The reasons are as described above.

In addition, the heat insulation sheet 10 according to the present embodiment may contain different fibers in addition to the first inorganic fiber 30 and the second inorganic fiber 31.

(Contents of First Inorganic Fiber and Second Inorganic Fiber)

The content of the first inorganic fiber 30 is preferably 3 mass% or more and 30 mass% or less with respect to the total mass of the heat insulation sheet 10, and the content of the second inorganic fiber 31 is preferably 3 mass% or more and 30 mass% or less with respect to the total mass of the heat insulation sheet 10.

In addition, the content of the first inorganic fiber 30 is more preferably 5 mass% or more and 15 mass% or less with respect to the total mass of the heat insulation sheet 10, and the content of the second inorganic fiber 31 is more preferably 5 mass% or more and 15 mass% or less with respect to the total mass of the heat insulation sheet 10. With such contents, the shape retention property, the pressing force resistance, and the wind pressure resistance of the first inorganic fiber 30 and the ability to retain the inorganic particle of the second inorganic fiber 31 are exhibited in a well-balanced manner. In addition, when the first inorganic fiber 30 is entangled with the second inorganic fiber 31 to form a three-dimensional network, the effect of retaining the first inorganic particle 20, the second inorganic particle 21, and other blending materials to be described later can be improved.

<Other Blending Materials>

Note that, the heat insulation sheet according to the present embodiment can contain other inorganic fibers, an organic fiber, a binding material such as an organic binder, and a colorant, if necessary, in addition to the first inorganic particle 20, the second inorganic particle 21, the first inorganic fiber 30, and the second inorganic fiber 31. All of these are useful for reinforcing the heat insulation sheet and improving the moldability, and the total amount thereof is preferably 10 mass% or less with respect to the total mass of the heat insulation sheet.

As a component for further improving the heat insulation effect, the heat insulation sheet 10 according to the present embodiment may contain an inorganic balloon in addition to the first inorganic particle whose particle diameter distribution is controlled as described above, or may contain an inorganic balloon as a part of the first inorganic particle. When the inorganic balloon is contained as part of the first inorganic particle, the particle diameter distribution of the inorganic particle including the inorganic balloon needs to be controlled within the above range. Hereinafter, other components will also be described in detail.

(Inorganic Balloon)

When the heat insulation sheet according to the present embodiment contains an inorganic balloon as the inorganic particle other than the first inorganic particle 20, the inorganic balloon may be contained in an amount of 40 mass% or less with respect to the total mass of the heat insulation sheet. The inorganic balloon means a particle having a hollow structure with a space inside the particle.

When the heat insulation sheet contains the inorganic balloon in a range of 40 mass% or less, the convective heat transfer and the conductive heat transfer of the heat within the heat insulation sheet can be suppressed in a temperature range of lower than 500°C, and the heat insulation property of the heat insulation sheet can be further improved.

The mass of the inorganic balloon with respect to the total mass of the heat insulation sheet is more preferably 30 mass% or less. Note that, as the inorganic balloon, at least one kind selected from a Shirasu balloon, a silica balloon, a fly ash balloon, a barite balloon, and a glass balloon can be used.

In the case where the heat insulation sheet according to the present embodiment contains an inorganic balloon, when the average particle diameter of the inorganic balloon is appropriately adjusted, even when the battery cell thermally expands and a compressive stress is applied to the heat insulation sheet, the influence of changes in density on the heat insulation property can be reduced.

That is, when the average particle diameter of the inorganic balloon is 1 $\mu$m or more and 100 $\mu$m or less, even when the density of the first inorganic particle 20 in the heat insulation sheet changes, it is possible to further suppress a decrease in heat insulation property. In addition, the average particle diameter of the inorganic balloon is more preferably 3 $\mu$m or more and 70 $\mu$m or less.

When the heat insulation sheet contains an organic fiber as other blending materials, a cellulose fiber or the like can be used as the organic fiber.

As other inorganic particle, mica, a microporous particle, a thermally expandable inorganic material, a hydrous porous material, aerogel, and an inorganic hydrate particle can be used. Examples of the thermally expandable inorganic material include vermiculite, bentonite, mica, and perlite. Examples of the hydrous porous material include zeolite, kaolinite, montmorillonite, acid clay, diatomaceous earth, wet silica, and dry silica. Further, as an organic particle, a hollow polystyrene particle or the like can be used.

It is also preferable to use a combination of plural kinds of the above hydrous porous materials. In addition, it is also preferable to provide a layer containing a larger amount of the hydrous porous material on the surface in order to suppress the temperature rise.

(Binding Material)

The heat insulation sheet according to the present embodiment can be formed by sintering and the like even when a binding material is not contained. However, it is preferable to add a binding material in an appropriate content in order to retain the shape of the heat insulation sheet. In the present embodiment, the binding material may be any binding material that binds the first inorganic particle 20 in order to retain the same, and the form thereof does not matter, such as a binder with adhesion, a fiber that physically entangles a particle, or a heat-resistant resin that adheres with an adhesive force.

Note that as the binder, an organic binder, an inorganic binder or the like can be used. In the present invention, the kinds are not particularly limited. As the organic binder, a polymer agglomerate, an acrylic emulsion, or the like can be used, and as the inorganic binder, silica sol, alumina sol, aluminum sulfate, or the like can be used. These function as adhesives once the solvent such as water is to be removed.

As the fiber, an organic fiber, an inorganic fiber, or the like can be used. The organic fiber is not particularly limited, and a synthetic fiber, a natural fiber, pulp, or the like can be used. The inorganic fiber is not particularly limited, and an alumina fiber, a silica-alumina fiber, a silica fiber, a glass fiber, glass wool, rock wool, and the like are preferably used.

On the other hand, since the binding material has a heat conduction property higher than that of the second inorganic particle 21, when the binding material is present in the voids formed in the heat insulation sheet to such an extent that the convective heat transfer does not occur, the second inorganic particle 21 is prevented from suppressing the convective heat transfer and the conductive heat transfer Therefore, in the heat insulation sheet according to the present embodiment, the content of the binding material is preferably 60 mass% or less, and more preferably 50 mass% or less, with respect to the total mass of the heat insulation sheet. In the heat insulation sheet according to the present embodiment, the content of the binding material is preferably 10 mass% or more, and more preferably 20 mass% or more, with respect to the total mass of the heat insulation sheet.

(Thickness of Heat Insulation Sheet)

The thickness of the heat insulation sheet according to the first embodiment is not particularly limited, and is preferably in a range of 0.1 mm or more and 30 mm or less. When the thickness of the heat insulation sheet is within the above range, sufficient mechanical strength can be obtained and molding is easy.

(Heat Conductivity of Heat Insulation Sheet)

The heat insulation sheet according to the present embodiment has a heat conductivity at 800°C of preferably 0.020 W/mK or more and 1.000 W/mK or less, more preferably 0.030 W/mK or more and 0.600 W/mK or less, and still more preferably 0.040 W/mK or more and 0.400 W/mK or less. In addition, the heat insulation sheet according to the present embodiment has a heat conductivity at 500°C of preferably 0.010 W/mK or more and 0.600 W/mK or less, more preferably 0.020 W/mK or more and 0.400 W/mK or less, and still more preferably 0.030 W/mK or more and 0.300 W/mK or less. The heat insulation sheet having the above heat conductivity has an excellent heat insulation property in a wide temperature range from a temperature during normal use of a battery to a high temperature of 500°C or higher

<Method for Producing Heat Insulation Sheet According to First Embodiment>

Next, a method for producing the heat insulation sheet according to the present embodiment will be described in detail.

In first embodiment, the heat insulation sheet 10 may be produced by molding a heat insulation sheet material containing the first inorganic particle 20, the second inorganic particle 21, the first inorganic fiber 30, and the second inorganic fiber 31 by a wet papermaking method, a dry molding method, or a wet molding method, or may be produced by an extrusion molding method. Hereinafter, a production method for obtaining the heat insulation sheet by each molding method will be described.

(Method for Producing Heat Insulation Sheet Using Wet Papermaking Method)

In the wet papermaking method, first, the first inorganic particle 20, the second inorganic particle 21, the first inorganic fiber 30, and the second inorganic fiber 31, and if necessary, a binding material are mixed in water and stirred with a stirrer to prepare a mixed liquid. Thereafter, the obtained mixed liquid is poured into a molding machine having a filtration mesh formed on a bottom surface, and the mixed liquid is dehydrated through the mesh, whereby a wet sheet is prepared. Thereafter, the obtained wet sheet is heated and pressurized, whereby a heat insulation sheet can be obtained. Note that, before the heating and pressurizing step, a ventilation drying treatment may be performed in which hot air is passed through the wet sheet to dry the sheet, or the wet sheet may be heated and pressurized in a wet state without being subjected to the ventilation drying treatment. In addition, in the case of using the wet molding method, a cationized starch or an acrylic resin can be selected as the organic binder.

(Method for Producing Heat Insulation Sheet Using Dry Press Molding Method)

In the dry molding method, first, the first inorganic particle 20, the second inorganic particle 21, the first inorganic fiber 30, the second inorganic fiber 31, and if necessary, a binding material are charged at a predetermined ratio into a mixer such as a V-kind mixer. Then, the materials charged into the mixer are sufficiently mixed, and then the mixture is charged into a predetermined mold and pressed to obtain a heat insulation sheet. During the pressing, heating may be performed if necessary.

The press pressure is preferably in a range of 0.98 MPa or more and 9.80 MPa or less. When the press pressure is less than 0.98 MPa, the obtained heat insulation sheet may not be able to maintain the strength and may collapse. On the other hand, when the press pressure is more than 9.80 MPa, the processability may decrease due to excessive compression, or due to an increase in bulk density, solid heat transfer may increase and the heat insulation property may decrease.

In the case of using the dry press molding method, it is preferable to use an ethylene-vinyl acetate copolymer (EVA) as the organic binder, and any organic binder that is generally used in the case of using the dry press molding method can be used without particular limitation.

(Method for Producing Heat Insulation Sheet Using Extrusion Molding Method)

In the extrusion molding method, first, water is added to a mixture of the first inorganic particle 20, the second inorganic particle 21, the first inorganic fiber 30, and the second inorganic fiber 31, and if necessary, a binding material, and kneading is performed using a kneader to prepare a paste. Thereafter, the obtained paste is extruded from a slit-shaped nozzle using an extrusion molding machine and further dried to obtain a heat insulation sheet. It is preferable to use methylcellulose, water-soluble cellulose ether, or the like as the organic binder being the binding material, and any organic binder that is generally used in the case of using the extrusion molding method can be used without particular limitation.

In the present invention, the heat insulation sheet contains the first inorganic particle, the second inorganic particle composed of a nanoparticle, and the inorganic fiber, and the total content of the first inorganic particle and the second inorganic particle and the particle diameter distribution of the first inorganic particle are appropriately defined. Note that, as described above, when the heat insulation sheet contains the first inorganic fiber and the second inorganic fiber different from each other in at least one property selected from an average fiber diameter, a shape, and a glass transition point, it is preferable that the first inorganic fiber is entangled with the second inorganic fiber to form a three-dimensional network. A second embodiment having a three-dimensional network formed by inorganic fibers will be described with reference to the drawings. Hereinafter, a structure having a three-dimensional network will be referred to as a three-dimensional web structure.

(Second Embodiment)

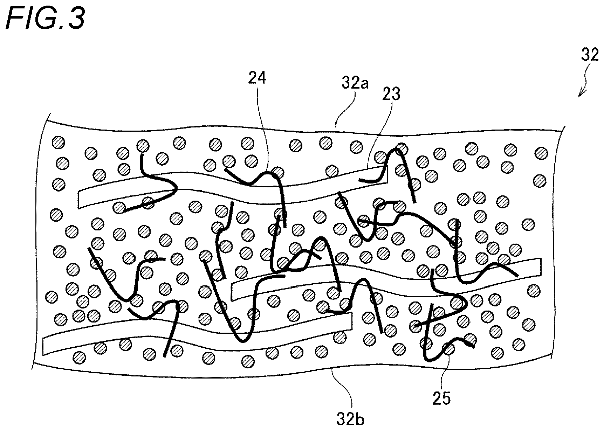

Fig. 3 is a schematic diagram showing a configuration of a heat insulation sheet according to the second embodiment of the present invention.

In a heat insulation sheet 32 according to the second embodiment,

(1) an inorganic particle 25 (the first inorganic particle 20 and the second inorganic particle 21) is uniformly dispersed,
(2) the first inorganic fiber 23 is uniformly dispersed and oriented in one direction parallel to a main surface of the sheet, and
(3) the second inorganic fiber 24 is intertwined with the first inorganic fiber 23 to form a three-dimensional web structure.

Note that, the inorganic particle 25 contains the first inorganic particle 20 and the second inorganic particle 21 in the first embodiment, but are shown as the inorganic particle 25 in Fig. 3. Similar to the first embodiment, the total content of the first inorganic particle 20 and the second inorganic particle 21 contained in the inorganic particle 25 and the particle diameter distribution of the first inorganic particle are defined as described above.

As shown in Fig. 3, in the present embodiment, the first inorganic fibers 23 are oriented in a layered manner in one direction parallel to main surfaces 32a, 32b of the heat insulation sheet 32. In addition, the first inorganic fiber 23 is intertwined with the second inorganic fiber 24 to form a three-dimensional web structure. At the same time, the inorganic particle 25 is uniformly spread and retained in a space between the first inorganic fiber 23 and the second inorganic fiber 24. The inorganic particle 25, the first inorganic fiber 23, and the second inorganic fiber 24 are all heat-resistant materials. In addition, countless minute spaces are formed between the particles, between the particle and the fiber, and between the fibers, and the air also exhibits a heat insulation effect, so that the heat transfer suppression performance is excellent.

Note that, in the present invention, "oriented in one direction" does not necessarily mean that all the first inorganic fibers 23 are oriented in that direction, and it is sufficient that the first inorganic fibers 23 have a strong tendency to line up in one specific direction. It can be determined by visual confirmation that the first inorganic fibers 23 are oriented in a specific direction. When it is difficult to distinguish between fibers, it can be confirmed by measuring the bending strength in the direction and confirming that the bending strength is 5% or more larger than in other directions.

In the present invention, the expression that the inorganic particle 25 and the first inorganic fiber 23 are "uniformly dispersed" indicates that the inorganic particle 21 and the first inorganic fiber 23 are not extremely unevenly distributed but are uniformly dispersed overall.

The materials, shapes, average fiber diameters, and average fiber lengths of the first inorganic fiber 23 and the second inorganic fiber 24 are the same as those of the first inorganic fiber 1 and the second inorganic fiber 3 in the first embodiment. In addition, the kinds, forms, and particle diameters of the first inorganic particle and the second inorganic particle contained in the inorganic particle 25 are also the same as those of the first inorganic particle 2 and the second inorganic particle 4 in the first embodiment.

The heat insulation sheet 32 according to the second embodiment can be applied to the battery pack shown in Fig. 2. That is, the heat insulation sheet 32 can be interposed between the battery cells 101, for example.

In the second embodiment configured as described above, since the total content of the first inorganic particle and the second inorganic particle contained in the inorganic particle 25 and the particle diameter distribution of the first inorganic particle are defined as described above, effects similar to those of the first embodiment can be obtained. In addition, in the present embodiment, since the first inorganic fiber 23 is uniformly dispersed and oriented in one direction parallel to the main surface inside the heat insulation sheet 32, the heat insulation property and the heat dissipation property within the sheet are excellent and uniform, and the heat generated from the battery cell can be effectively dissipated. Therefore, even when a battery cell experiences thermal runaway, heat to adjacent battery cells can be blocked and a chain reaction can be prevented. In addition, the first inorganic fiber 23 is intertwined with the second inorganic fiber 24 to form a three-dimensional web structure, and the second inorganic fiber 24 functions as a heat transfer path connecting the first inorganic fiber the first inorganic fiber. That is, the heat transferred in a thickness direction of the heat insulation sheet 32 by the second inorganic fiber 24 is transferred in a direction parallel to the main surface of the heat insulation sheet 32 by the first inorganic fiber 23, and can be radiated. Further, the three-dimensional web structure provides excellent strength.

(Heat Conductivities of First Inorganic Fiber and Second Inorganic Fiber)

It is preferable that the heat insulation sheet 32 in the second embodiment has an excellent heat insulation performance, and it is preferable that both the first inorganic fiber 23 and the second inorganic fiber 24 have a small heat conductivity. However, it is preferable that the second inorganic fiber 24 has a heat conductivity larger than that of the first inorganic fiber 23 since it serves as a heat transfer path connecting the first inorganic fibers oriented in a layered manner. Therefore, in consideration of the heat insulation performance, the heat conductivity of the second inorganic fiber 24 is preferably 41 [W/m·K] or less.

(Contents of Inorganic Particle, First Inorganic Fiber, and Second Inorganic Fiber)

In the second embodiment, the content of the entire inorganic particle 25 is preferably 30 mass% or more and 80 mass% or less with respect to the total mass of the heat insulation sheet 32. The content of the inorganic particle 25 is more preferably 40 mass% or more and 70 mass% or less, and 50 mass% or more and 60 mass% or less.

In addition, the total content of the first inorganic fiber 23 and the second inorganic fiber 24 is preferably 5 mass% or more and 30 mass% or less with respect to the total mass of the heat insulation sheet 32. The total content of the first inorganic fiber 23 and the second inorganic fiber 24 is more preferably 10 mass% or more and 25 mass% or less, and 15 mass% or more and 20 mass% or less.

With such contents, the heat absorption and heat insulation effect of the inorganic particle 25, the shape retention property, the pressing force resistance, and the wind pressure resistance of the first inorganic fiber 23, and the heat transfer path effect and the ability to retain the inorganic particle 25 of the second inorganic fiber 24 are exhibited in a well-balanced manner.

<Method for Producing Heat Insulation Sheet According to Second Embodiment>

As a method for producing the heat insulation sheet according to the second embodiment, first, the inorganic particle 25 containing the first inorganic particle and the second inorganic particle, the first inorganic fiber 23, and other blending materials are added to water at a predetermined ratio and kneaded using a kneader, to prepare a paste. Thereafter, the obtained paste is extruded from a slit-shaped nozzle using an extrusion molding machine to obtain a first member. This first member is a sheet-like wet material, in which the first inorganic fibers 23 are oriented in one direction and the inorganic particle 25 is retained between the fibers.

In addition, the inorganic particle 25, the second inorganic fiber 24, and other blending materials are dry mixed at a predetermined ratio and press-molded to obtain a second member. This second member has a sheet shape, in which the second inorganic fibers 24 are randomly present and the inorganic particle 25 are retained between the fibers.

Then, a plurality of first members and second members are laminated alternately, and the whole is press-molded and dried, to obtain the heat insulation sheet 32. During press molding, the second inorganic fibers 24 randomly present in the second member enter the first member in a wet state and are entangled with the first inorganic fibers 23. Then, by drying, such a state is maintained and the heat insulation sheet 32 is obtained.

(Thickness of Heat Insulation Sheet)

In the second embodiment, the thickness of the heat insulation sheet 32 is not particularly limited, and is preferably in a range of 0.05 mm or more and 6 mm or less. When the thickness of the heat insulation sheet 32 is 0.05 mm or more, sufficient mechanical strength can be imparted to the heat insulation sheet. On the other hand, when the thickness of the heat insulation sheet 32 is 6 mm or less, good assemblability can be obtained.

(Heat Insulation Performance of Heat Insulation Sheet)

The heat conductivity can be mentioned as an indicator indicating the heat insulation performance. In each of the above embodiments, the heat conductivity of the heat insulation sheet is preferably less than 1 (W/m·K), more preferably less than 0.5 (W/m·K), and still more preferably less than 0.2 (W/m·K). Further, the heat conductivity is even more preferably less than 0.1 (W/m·K), even still more preferably less than 0.05 (W/m·K), and particularly preferably less than 0.02 (W/m·K). Note that the heat conductivity can be measured in accordance with "Testing method for heat conductivity of refractories" described in JIS R 2251.

[Battery Pack]

The configuration of the battery pack is as illustrated in Fig. 2 above. Here, the configuration and effects of the battery pack using the heat insulation sheet 10 according to the first embodiment of the present invention will be specifically described using Fig. 2.

As shown in Fig. 2, the battery pack 100 includes the plurality of battery cells 101 and, for example, the above heat insulation sheet 10, and the plurality of battery cells 101 are connected in series or in parallel. As shown in Fig. 2, it is preferable that the plurality of battery cells 101 are disposed with the above heat insulation sheet 10 interposed therebetween.

The battery pack according to the present embodiment is not limited to the battery pack 100 shown in Fig. 2. The heat insulation sheet 10 may be disposed not only between the battery cell 101 and the battery cell 101 but also between the battery cell 101 and the battery case 110, or may be attached to an inner surface of the battery case 110.

In the battery pack 100 configured as described above, when a certain battery cell ignites, it is possible to suppress the flame from spreading to the outside of the battery case 110.

For example, the battery pack 100 according to the present embodiment is used in an electric vehicle (EV) or the like, and is sometimes disposed under a passenger's floor. In this case, even when the battery cell ignites, the safety of the passenger can be ensured.

In addition, since the heat insulation sheet 10 can be disposed not only between the battery cells but also between the battery cell 101 and the battery case 110, it is not necessary to newly prepare a heat insulation material or the like, and a safe battery pack 100 can be easily formed at a low cost.

In the battery pack according to the present embodiment, the heat insulation sheet 10 disposed between the battery cell 101 and the battery case 110 may be in contact with the battery cell 101 or may have a gap therebetween. However, in a case where there is a gap between the heat insulation sheet 10 and the battery cells 101, even when the temperature of any one battery cell of the plurality of battery cells 101 rises and the volume expands, the deformation

EP 4 455 091 A1

of the battery cell 101 is allowable.

Note that, the heat insulation sheet according to the present embodiment can also be easily bent. In this case, it is not influenced by the shapes of the battery cells 101 and the battery case 110, and can be adapted to any shape. Specifically, it can be applied to cylindrical batteries, flat batteries, and the like, in addition to prismatic batteries.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that the present application is based on a Japanese patent application (Japanese Patent Application No. 2021-207581) filed on December 21, 2021 and a Japanese patent application (Japanese Patent Application No. 2022-077193) filed on May 9, 2022, and the contents thereof are incorporated herein by reference.

REFERENCE SIGNS LIST

    10, 32 heat insulation sheet
    10a, 10b surface
    20 first inorganic particle
    21 second inorganic particle
    23, 30 first inorganic fiber
    24, 31 second inorganic fiber
    25 inorganic particle
    100 battery pack
    101 battery cell
    110 battery case

**Claims**

1. A heat insulation sheet comprising:

    a first inorganic particle;
    a second inorganic particle composed of a nanoparticle; and
    an inorganic fiber, wherein
    a total content of the first inorganic particle and the second inorganic particle is 30 mass% or more and 90 mass% or less with respect to a total mass of the heat insulation sheet, and
    when particle diameters at cumulative 10%, 50%, and 90% from a small particle diameter side in a volume-based cumulative distribution of the first inorganic particle as measured by a laser diffraction and scattering method are defined as D10, D50, and D90, respectively, the D50 is 1 $\mu$m or more and 100 $\mu$m or less, and a ratio (D90/D10) of the D90 to the D10 is 10 or more and 1000 or less.

2. The heat insulation sheet according to claim 1, wherein each of the first inorganic particle and the second inorganic particle is a particle composed of at least one kind of inorganic material selected from an oxide particle, a carbide particle, a nitride particle, and an inorganic hydrate particle.

3. The heat insulation sheet according to claim 1, wherein the inorganic fiber contains a first inorganic fiber and a second inorganic fiber different from each other in at least one property selected from an average fiber diameter, a shape, and a glass transition point.

4. The heat insulation sheet according to claim 3, wherein

    the average fiber diameter of the first inorganic fiber is larger than the average fiber diameter of the second inorganic fiber, and
    the first inorganic fiber is linear or acicular, and the second inorganic fiber is dendritic or curly.

5. The heat insulation sheet according to claim 3, wherein

the first inorganic fiber is an amorphous fiber, and
the second inorganic fiber is at least one kind of inorganic fiber selected from an amorphous fiber having a glass transition point higher than the glass transition point of the first inorganic fiber, and a crystalline fiber.

6. The heat insulation sheet according to claim 5, wherein the average fiber diameter of the first inorganic fiber is larger than the average fiber diameter of the second inorganic fiber.

7. The heat insulation sheet according to claim 1, wherein a content of the first inorganic particle of 3 $\mu$m or more and 10 $\mu$m or less is 10 mass% or more and 80 mass% or less with respect to a total mass of the first inorganic particle.

8. The heat insulation sheet according to claim 1, wherein

   the D10 is 0.2 $\mu$m or more and 1.5 $\mu$m or less, and
   the D90 is 15 $\mu$m or more and 200 $\mu$m or less.

9. The heat insulation sheet according to claim 1, wherein an average distance between the first inorganic particles having a particle diameter of 5 $\mu$m or more and 100 $\mu$m or less is 0.1 $\mu$m or more and 1000 $\mu$m or less.

10. The heat insulation sheet according to claim 1, wherein an average distance between the first inorganic particles having a particle diameter of less than 5 $\mu$m is 0.01 $\mu$m or more and 100 $\mu$m or less.

11. The heat insulation sheet according to claim 1, wherein the first inorganic particle is at least one kind selected from titania, zirconia, zircon, barium titanate, zinc oxide, and alumina.

12. The heat insulation sheet according to claim 1, wherein the second inorganic particle is a silica nanoparticle.

13. The heat insulation sheet according to claim 1, wherein a content of the second inorganic particle is 40 mass% or more and 95 mass% or less with respect to the total mass of the first inorganic particle and the second inorganic particle.

14. The heat insulation sheet according to claim 1, wherein

   a heat conductivity at 800°C is 0.020 W/mK or more and 1.000 W/mK or less, and
   a heat conductivity at 500°C is 0.010 W/mK or more and 0.600 W/mK or less.

15. The heat insulation sheet according to claim 3, wherein

   the first inorganic particle and the second inorganic particle are uniformly dispersed,
   the first inorganic fiber is uniformly dispersed and oriented in one direction parallel to a main surface of the sheet, and the second inorganic fiber is intertwined with the first inorganic fiber to form a three-dimensional web structure.

16. The heat insulation sheet according to claim 15, wherein the second inorganic fiber has a heat conductivity of 41 [W/m·K] or less.

17. The heat insulation sheet according to claim 15, wherein a total content of the first inorganic fiber and the second inorganic fiber is 5 mass% or more and 30 mass% or less with respect to the total mass of the heat insulation sheet.

18. A battery pack comprising:

   a plurality of battery cells; and
   the heat insulation sheet according to any one of claims 1 to 17, wherein
   the plurality of battery cells is connected in series or in parallel.

*FIG.1*

*FIG.2*

FIG.3

## INTERNATIONAL SEARCH REPORT

| International application No. |
| --- |
| **PCT/JP2022/046980** |

### A. CLASSIFICATION OF SUBJECT MATTER

*C01G 23/047*(2006.01)i; *F16L 59/02*(2006.01)i; *H01M 10/613*(2014.01)i; *H01M 10/651*(2014.01)i;
*H01M 10/6555*(2014.01)i; *H01M 10/658*(2014.01)i; *H01M 10/659*(2014.01)i
FI:   F16L59/02; H01M10/658; H01M10/659; H01M10/651; H01M10/613; H01M10/6555; C01G23/047

According to International Patent Classification (IPC) or to both national classification and IPC

### B. FIELDS SEARCHED

Minimum documentation searched (classification system followed by classification symbols)

C01G23/047; F16L59/02; H01M10/613; H01M10/651; H01M10/6555; H01M10/658; H01M10/659

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2021-64510 A (IBIDEN CO LTD) 22 April 2021 (2021-04-22)<br>paragraphs [0001], [0024]-[0063], fig. 1-4 | 1-18 |
| Y | JP 2017-43667 A (SANYU REC CO LTD) 02 March 2017 (2017-03-02)<br>paragraphs [0066]-[0087], [0103] | 1-18 |
| Y | JP 2020-165065 A (OJI HOLDINGS CORP) 08 October 2020 (2020-10-08)<br>paragraphs [0001], [0014]-[0136] | 3-6, 15-18 |
| A | JP 2021-34278 A (IBIDEN CO LTD) 01 March 2021 (2021-03-01) | 1-18 |
| A | JP 2020-119840 A (IBIDEN CO LTD) 06 August 2020 (2020-08-06) | 1-18 |
| A | JP 2018-160445 A (TOSHIBA CORP) 11 October 2018 (2018-10-11) | 1-18 |
| A | JP 2005-146124 A (TORAY IND INC) 09 June 2005 (2005-06-09) | 1-18 |
| A | JP 2010-100682 A (TECHNO POLYMER CO LTD) 06 May 2010 (2010-05-06) | 1-18 |

☑ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 February 2023** | **28 February 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

<table>
<tr><td>International application No.<br><br>**PCT/JP2022/046980**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | JP 2012-193656 A (IBIDEN CO LTD) 11 October 2012 (2012-10-11) | 9-10 |
| P, A | WO 2022/163853 A1 (IBIDEN CO LTD) 04 August 2022 (2022-08-04) | 1-18 |
| P, A | JP 2022-24234 A (IBIDEN CO LTD) 09 February 2022 (2022-02-09) | 1-18 |

Form PCT/ISA/210 (second sheet) (January 2015)

**INTERNATIONAL SEARCH REPORT**
Information on patent family members

International application No.

**PCT/JP2022/046980**

| Patent document cited in search report | | | Publication date (day/month/year) | Patent family member(s) | | | Publication date (day/month/year) |
|---|---|---|---|---|---|---|---|
| JP | 2021-64510 | A | 22 April 2021 | US | 2022/0367938 | A1 | |
| | | | | paragraphs [0001], [0044]-[0117], fig. 1-4 | | | |
| | | | | WO | 2021/070933 | A1 | |
| | | | | CN | 114556669 | A | |
| JP | 2017-43667 | A | 02 March 2017 | (Family: none) | | | |
| JP | 2020-165065 | A | 08 October 2020 | WO | 2020/202901 | A1 | |
| JP | 2021-34278 | A | 01 March 2021 | US | 2022/0200080 | A1 | |
| | | | | WO | 2021/039844 | A1 | |
| | | | | EP | 3835262 | A1 | |
| | | | | KR | 10-2021-0034671 | A | |
| | | | | CN | 112714978 | A | |
| JP | 2020-119840 | A | 06 August 2020 | (Family: none) | | | |
| JP | 2018-160445 | A | 11 October 2018 | US | 2018/0277909 | A1 | |
| | | | | EP | 3379604 | A1 | |
| | | | | CN | 108630981 | A | |
| | | | | KR | 2013/0068339 | A | |
| JP | 2005-146124 | A | 09 June 2005 | (Family: none) | | | |
| JP | 2010-100682 | A | 06 May 2010 | (Family: none) | | | |
| JP | 2012-193656 | A | 11 October 2012 | US | 2013/0068339 | A1 | |
| | | | | EP | 2500539 | A1 | |
| | | | | CN | 102678249 | A | |
| WO | 2022/163853 | A1 | 04 August 2022 | JP | 2022-117936 | A | |
| JP | 2022-24234 | A | 09 February 2022 | WO | 2022/009852 | A1 | |
| | | | | KR | 10-2022-0025198 | A | |
| | | | | CN | 114258388 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018204708 A
- JP 2003202099 A
- JP 2018206605 A
- JP 2021207581 A
- JP 2022077193 A